# EUROPEAN PATENT APPLICATION

(11) **EP 2 199 415 A1**
(43) Date of publication of application: **23.06.2010**
(21) Application number: 08778302.3
(22) Date of filing: 14.07.2008
(51) Int. Cl.: C21B 11/02, F23G 7/06, F23G 7/08, F27D 17/00

(54) **METHOD OF TREATING RESIDUAL FLUE GAS AND APPARATUS THEREFOR**

(30) Priority: 31.08.2007 JP 2007226750
(71) Applicant: Nippon Steel Corporation, Chiyoda-ku Tokyo 100-8071 (JP); Kuettner Gmbh & Co. Kg, Essen 45128 (DE)
(72) Inventor: OMATSU, Yasuhiko, Tokyo 100-8071 (JP); AKAGI, Kazushi, Tokyo 100-8071 (JP); SHINOTAKE, Akihiko, Tokyo 100-8071 (JP); NAITO, Masaaki, Tokyo 100-8071 (JP); SOEJIMA, Hisanobu, Tokyo 100-8071 (JP); TSUBOTA, Jun, Tokyo 100-8071 (JP); KIKUCHI, Zen-etsu, Tokyo 100-8071 (JP); SUZUKI, Hiroyuki, Tokyo 100-8071 (JP); LACHNER, Hans Jaan, Essen 45128 (DE); LEMPERLE, Michel, Essen 45128 (DE)
(74) Representative: Vossius & Partner
(86) International application number: PCT/JP2008/063075
(87) International publication number: WO 2009/028274

(57) **Abstract**

A residual exhaust gas treatment method treating exhaust gas containing combustible ingredients remaining in an exhaust gas path containing an exhaust gas treatment device when operation of a shaft furnace is idled or stopped, said method comprising (a) closing the exhaust gas path between the shaft furnace and exhaust gas treatment device, (b) feeding nitrogen to the exhaust gas path at the exhaust gas treatment device side, (c) holding the gas pressure in the exhaust gas path at a positive pressure, and (d) burning and dispersing the gas at a flow rate exceeding the CO and H₂ flashback rates.

## Description

### TECHNICAL FIELD

The present invention relates to a treatment method and treatment system for safely burning and dispersing into the atmosphere any exhaust gas remaining in an exhaust gas path including an exhaust gas treatment device when suspending or stopping operation of a shaft furnace.

### BACKGROUND ART

In recent years, from the viewpoint of promoting recycling of resources and environmental protection, attention is being paid to the technology for using iron-containing dust pellets etc. and/or iron scraps as a source of iron and reducing and melting them in a shaft furnace to produce pig iron. In such a shaft furnace, the reduction and melting are carried out inside the furnace simultaneously, so it is important for the η_{CO} (gas utilization rate) of gas created when burning the solid fuel charged mixed with the iron source to be controlled to an optimum value.

For example, Japanese Patent Publication (A) No. 10-36906 discloses the technology for controlling the η_{CO} of exhaust gas and securing the most appropriate η_{CO} (gas utilization rate) for reduction and melting in a method of operation of a shaft furnace reducing and melting a raw material and fuel in a shaft furnace.

In this way, control of the composition of the exhaust gas is important in operation of a shaft furnace, however, treatment of the large amount of generated exhaust gas (containing combustible ingredients) is important in terms of environmental protection and safety in exhaust gas treatment systems.

Normally, during operation, a shaft furnace discharges exhaust gas comprising 25 to 30% CO, 2 to 3% of H₂, and a balance of N₂ at 30,000 to 40,000 Nm³/hr. The large amount of exhaust gas includes the combustible ingredient CO, so it is sucked in, cooled, and cleared of dust by an exhaust gas treatment device, then dispersed into the atmosphere from the combustion dispersion stack.

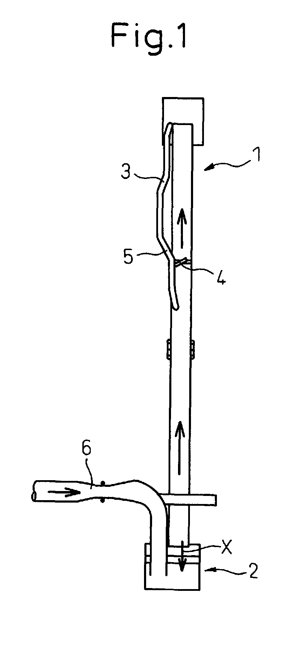

Conventionally, when dispersing the exhaust gas from the combustion dispersion stack, as shown in FIG. 1, the lower portion of the combustion dispersion stack 1 is provided with a water seal apparatus 2 that prevents flashback X so as to secure safety in the exhaust gas treatment system. That is, during the operation of the shaft furnace, the exhaust gas sucked in, cooled, and cleared of dust by an exhaust gas treatment device (not shown) passes through an exhaust gas pipe 6, enters the water seal apparatus 2, and is dispersed into the atmosphere from a combustion dispersion stack 1 with an opened main shutoff valve 4.

When the operation of the shaft furnace is idled or stopped, the exhaust gas remaining in the exhaust gas treatment device must be treated. The exhaust gas path between the shaft furnace and exhaust gas treatment device is closed, the minimum necessary amount of nitrogen is fed at 1300 Nm³/hr to the exhaust gas path at the exhaust gas treatment device side, the nitrogen is used to dilute the combustible ingredients, then the residual exhaust gas passes through the water seal apparatus 2 and is burned and dispersed into the atmosphere from a bypass pipeline 3 (by opening the bypass shutoff valve 5 and closing the main shutoff valve 4).

At this time, even if feeding nitrogen, sometimes air enters the exhaust gas path containing the exhaust gas treatment device and the residual exhaust gas becomes explosive. Therefore, the water seal apparatus 2 has the function of preventing flashback even in residual exhaust gas treatment when operation of the shaft furnace is idled or stopped.

However, a water seal apparatus is an apparatus requiring a tank with for example a 5 meter diameter and 3 meter height for constantly holding water and control of the water level by recirculated water. This is set at the exhaust gas path. Its constant operation, maintenance, and inspection raise the operational costs of the shaft furnace.

When treating exhaust gas containing combustible ingredients, ensuring safety is the highest priority. However, from the viewpoint of promoting recycling of resources, an increase in salvaging costs is undesirable, so there is demand for technology which can safely treat exhaust gas containing combustible ingredients without having to set a large sized water seal apparatus in the exhaust gas path.

### DISCLOSURE OF THE INVENTION

As explained above, in treatment of residual exhaust gas when operation of a shaft furnace is idled or stopped, even if feeding nitrogen gas to the exhaust gas path, sometimes air enters the exhaust gas treatment device and the gas in the exhaust gas path becomes explosive. Thus, the present invention has as its object to provide a treatment method and treatment system that can safely burn and disperse into the atmosphere residual exhaust gas containing combustible ingredients even without installing a large sized water seal apparatus.

The reason why the exhaust gas remaining in an exhaust gas path containing an exhaust gas treatment device becomes explosive is the entry of air (that is, oxygen) into the exhaust gas path, so the inventors engaged in intensive study regarding techniques to completely prevent the entry of air into the exhaust gas path.

As a result, they discovered that if, rather than simply feeding nitrogen into the exhaust gas path, controlling the gas pressure in the exhaust gas path simultaneously with nitrogen feed and controlling the gas flow rate at time of combustion and dispersal, it is possible to prevent flashbacks and safely disperse residual exhaust gas into the atmosphere.

The present invention was made based on the above discovery and has as its gist the following:
(1) A residual exhaust gas treatment method treating exhaust gas containing combustible ingredients remaining in an exhaust gas path containing an exhaust gas treatment device when operation of a shaft furnace is idled or stopped, comprising
   (a) closing the exhaust gas path between the shaft furnace and exhaust gas treatment device,
   (b) feeding nitrogen into the exhaust gas path at the exhaust gas treatment device side,
   (c) holding the gas pressure in the exhaust gas path at a positive pressure, and
   (d) burning and dispersing the gas at a flow rate exceeding flashback rates of CO and H₂.
(2) A residual exhaust gas treatment method as set forth in (1), wherein the exhaust gas includes CO: 25 to 30% and H₂: 2 to 3%.
(3) A residual exhaust gas treatment method as set forth in (1) or (2), wherein the exhaust gas treatment device includes a gas cooler and a dust eliminator.
(4) A residual exhaust gas treatment method as set forth in any one of (1) to (3), wherein the gas in the exhaust gas path is cooled and cleared of dust before combustion and dispersal.
(5) A residual exhaust gas treatment method as set forth in any one of (1) to (4), wherein the flow rate exceeding the flashback rates is 5 m/sec or more.
(6) A residual exhaust gas treatment method as set forth in any one of (1) to (5), wherein the flow rate exceeding the flashback rates is 12 m/sec or less.
(7) A residual exhaust gas treatment system treating exhaust gas containing combustible ingredients remaining in an exhaust gas path containing an exhaust gas treatment device when operation of a shaft furnace is idled or stopped, the system provided with
   (a) a cutoff valve closing the exhaust gas path between the shaft furnace and exhaust gas treatment device,
   (b) a nitrogen feeding means for feeding nitrogen from near the cutoff valve to the inside of exhaust gas path at the exhaust gas treatment device side,
   (c) a gas pressure regulator maintaining a gas pressure in the exhaust gas path between the exhaust gas treatment device and a combustion dispersion stack at a positive pressure, and
   (d) a cutoff valve closing the gas passage of the combustion dispersion stack and a bypass pipeline branching from the combustion dispersion stack and burning and dispersing the gas in the exhaust gas path.
(8) A residual exhaust gas treatment system as set forth in (7), wherein the exhaust gas includes CO: 25 to 30% and H₂: 2 to 3%.
(9) A residual exhaust gas treatment system as set forth in (7) or (8), wherein the exhaust gas treatment device includes a gas cooler and dust eliminator.
(10) A residual exhaust gas treatment system as set forth in any one of (7) to (9), wherein the gas in the exhaust gas path is cooled and cleared of dust before combustion and dispersal.
(11) A residual exhaust gas treatment system as set forth in any one of (7) to (11), which burns and disperses the gas in the exhaust gas path from an outlet of the bypass pipeline at a flow rate exceeding the flashback rates of CO and H₂.
(12) A residual exhaust gas treatment system as set forth in (11), wherein the flow rate exceeding the flashback rates is 5 m/sec or more.
(13) A residual exhaust gas treatment system as set forth in any one of (7) to (12), wherein the flow rate exceeding the flashback rates is 12 m/sec or less.

According to the present invention, when operation of a shaft furnace is idled or stopped, the exhaust gas containing combustible ingredients remaining in an exhaust gas path containing an exhaust gas treatment device can be burned and dispersed into the atmosphere safely and without fear of flashback.

### BRIEF DESCRIPTION OF THE DRAWINGS

FIG. 1 is a view showing a conventional exhaust gas treatment facility provided with a water sealing apparatus.
FIG. 2 is a view showing one mode of an exhaust gas path for carrying out the present invention.
FIG. 3 is a view showing a mode of adjusting an opening degree of a regulator and maintaining a gas pressure in the exhaust gas path at a positive pressure.
FIG. 4 is a view showing a gas pressure distribution in the exhaust gas path when the present invention is applied.

### BEST MODE FOR CARRYING OUT THE INVENTION

The present invention will be explained based on the drawings.

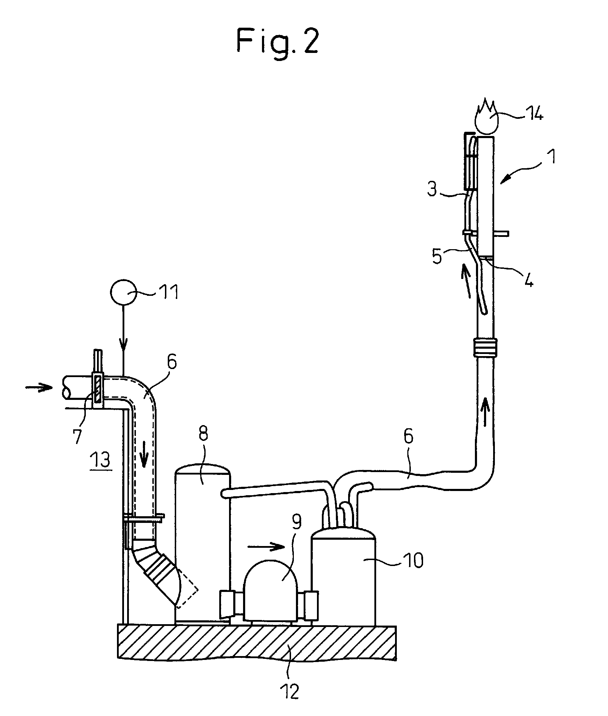

FIG. 2 shows one mode of an exhaust gas path for carrying out the present invention. On a base 12, a cooler 8, gas suction dust eliminator 9, and mist separator 10 are arranged while connected by an exhaust gas pipe 6. At the time of operation of the shaft furnace, the exhaust gas generated at the shaft furnace (not shown) is introduced by the exhaust gas pipe 6 fixed on a support base 13 to the cooler 8 and is cooled by being sprayed by water inside the cooler 8.

The cooled exhaust gas is next sucked up and cleared of dust by the gas suction dust eliminator 9 and cleared of mist (fine water droplets) by the mist separator 10, then passes through the exhaust gas pipe 6 leading to a combustion dispersion stack 1, is burned at the outlet of the combustion dispersion stack 1 (refer to flame 14) and is dispersed in the atmosphere.

At the combustion dispersion stack 1, a main shutoff valve 4 for opening and closing the gas passage is attached. At the time of normal operation, is made wide open. Further, the combustion dispersion stack 1 is provided with a bypass pipeline 3 that branches from its middle. This is used at the time of exhaust gas treatment when the operation of the shaft furnace is idled or stopped. At the bypass pipeline 3, a bypass shutoff valve for opening and closing the pipeline is attached. At the time of normal operation, it is fully closed.

Exhaust gas generated at a shaft furnace normally contains CO: 25 to 30% and H₂: 2 to 3%. If air (oxygen) enters, the gas becomes explosive, however, the gas suction dust eliminator 9 is subjected to suction by a suction apparatus (not shown), so the exhaust gas quickly passes through the exhaust gas path without retention and is dispersed from the combustion dispersion stack. That is, no particular problem occurs in exhaust gas treatment in normal operation of the shaft furnace.

The exhaust gas pipe 6 introducing the exhaust gas to the cooler 8 is provided with a cutoff valve 7 which is actuated when the shaft furnace is idled or stopped. Further, immediately after the cutoff valve 7 is actuated, the exhaust gas pipe 6 is connected with a nitrogen feed pipe 11 of a nitrogen feeding means for feeding nitrogen.

When the operation of the shaft furnace is idled or stopped, upon an order from a control apparatus (not shown), the cutoff valve 7 closes the exhaust gas pipe 6 and the nitrogen feed pipe 11 begins to feed nitrogen to the inside of the exhaust gas pipe 6. At this time, simultaneously, the gas suction dust eliminator 9 continues to operate. The opening degree of the regulator arranged at the upper part of the mist separator 10 is adjusted to hold the gas pressure inside the exhaust gas path containing the exhaust gas treatment device at a positive pressure exceeding 1 atmosphere.

In the present invention, when the operation of the shaft furnace is idled or stopped, the suction apparatus applying suction to the gas suction dust eliminator 9 is operated and the opening degree of the regulator arranged at the upper part of the mist separator 10 is adjusted to maintain the gas pressure inside the exhaust gas path containing the exhaust gas treatment device at a positive pressure, so entry of air into the exhaust gas path can be prevented. This point is the characterizing feature of the present invention.

In general, it is known that if maintaining the pressure inside a device at a positive pressure, intrusion of outside air into the device can be prevented. However, in an exhaust gas path that contains an exhaust gas treatment device treating a large amount of exhaust gas of 30,000 to 40,000 Nm³/hr at time of normal operation and further feeding nitrogen at 1,300 Nm³/hr to dilute the combustible exhaust gas at time of idling or stopping of operation, technical ingenuity is necessary to prevent air intrusion and secure safety throughout all of the exhaust gas path by holding the gas pressure at a positive pressure exceeding the 1 atmosphere and by maintaining the flow rate, which is dependent on the gas pressure, at a required range of flow rate at the outlet with the combustion dispersion stack.

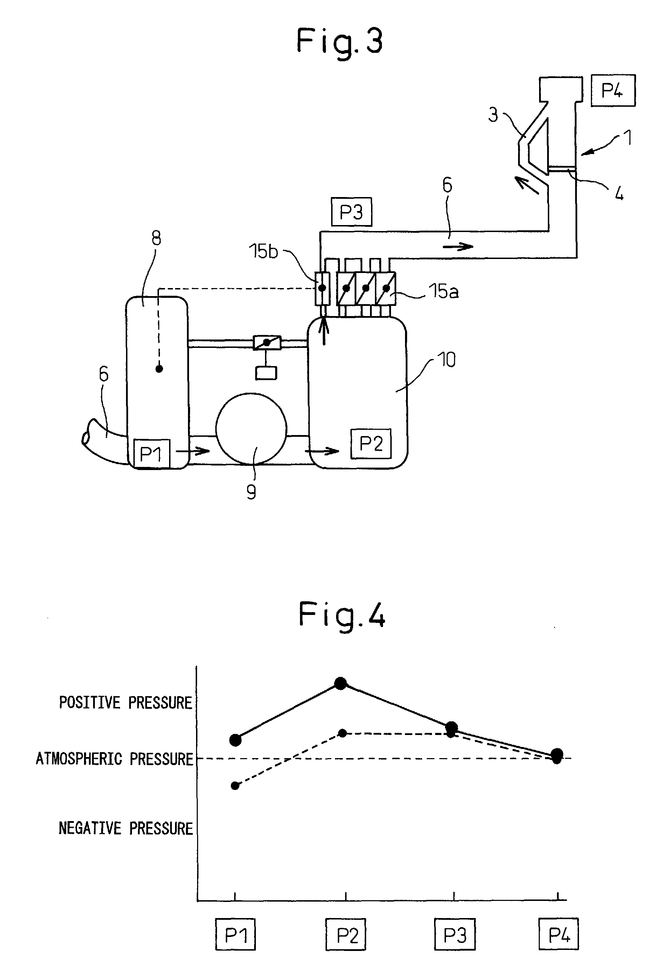

FIG. 3 schematically shows one mode of adjusting the opening degree of the regulator and holding the gas pressure in the exhaust gas path containing the exhaust gas treatment device at a positive pressure. The top of the mist separator 10 is provided with three furnace top pressure regulators 15a and one in-path pressure regulator 15b.

At the time of normal operation of the shaft furnace, the in-path pressure regulator 15b is closed. The opening degrees of the three furnace top pressure regulators 15a are appropriately adjusted for the large amount of exhaust gas of 30,000 to 40,000 Nm³/hr to regulate the furnace top pressure. Normally, the opening degrees of the three furnace top pressure regulators 15a are adjusted so that the furnace top pressure becomes 0.

Even when idling or stopping operation of the shaft furnace operation, the suction apparatus applying suction to the gas suction dust eliminator 9 continues to be operated, then all three furnace top pressure regulators 15a are closed to adjust the opening degree of the in-path pressure regulator 15b.

At the same time that the operation is idled or stopped, the cutoff valve 7 is actuated and 1,300 Nm³/hr of nitrogen begins to be fed from the nitrogen feed pipe 11 to the exhaust gas pipe 6. With a feed of 1,300 Nm³/hr of nitrogen, the furnace top pressure regulator 15a regulating the pressure of the large amount of exhaust gas becomes ineffective in pressure regulation action. Therefore, nitrogen is fed to the exhaust gas pipe 6, all of the three furnace top pressure regulators 15a are closed fully, and the opening degree of the in-path pressure regulator 15b of a small diameter suitable for the feed of 1,300 Nm³/hr of nitrogen is adjusted in order to generate a large positive pressure inside the mist separator 10 and maintain the gas pressure inside the exhaust gas path upstream of the mist separator 10 at a positive pressure.

If the gas pressure in the exhaust gas path becomes too high, conversely the residual exhaust gas will leak outside, so the gas pressure is made a range where residual exhaust gas does not leak outside.

In the state with the gas pressure inside the exhaust gas path maintained at a positive pressure, the residual exhaust gas with the combustible ingredient diluted by nitrogen passes through the in-path pressure regulator 15b and flows into the exhaust gas pipe 6 leading to the combustion dispersion stack 1. However, the inflow amount is inevitably smaller compared with the flow amount during normal operation, so the main shutoff valve 4 of the combustion dispersion stack 1 is closed, the bypass shutoff valve of the bypass pipe 3 is opened, and the residual exhaust gas is dispersed through the bypass pipe 3 from the outlet of the combustion dispersion stack 1.

Here, FIG. 4 shows an example of the gas pressure distribution in the exhaust gas path when the present invention is applied.

### P1 to P2 in FIG. 4 correspond to P1 to P2 in FIG. 3.

P2 is the position of the mist separator. In the present invention, the opening degrees of the regulators arranged at the top of the mist separator are adjusted. Here, a high positive pressure is formed to maintain the gas pressure inside the exhaust gas path upstream of the mist separator at a positive pressure.

As shown in FIG. 4, if the pressure formed at the mist separator (P2) is low, a positive pressure cannot be maintained at the inside of the cooler (P1) and air enters the cooler.

It will be understood that since a positive pressure state is maintained even at the position P1 of the cooler 8, the gas pressure inside the exhaust gas path containing the exhaust gas treatment device is maintained at a positive pressure.

When the residual exhaust gas is dispersed from the combustion dispersion stack 1, naturally the gas pressure becomes the atmospheric pressure, however, at this time, in order to prevent flashbacks due to the combustible ingredients (CO and H₂) in the residual exhaust gas, it is important that the gas flow rate at the time of residual exhaust gas dispersal be made a flow rate exceeding the flashback rates of CO and H₂.

In the present invention, the gas flow rate at the time of residual exhaust gas dispersal is made a flow rate exceeding the CO and H₂ flashback rates, so there is no need to install a large water seal apparatus at the combustion dispersion stack.

To more reliably prevent flashbacks, the gas flow rate at the time of residual exhaust gas dispersal is preferably 5 m/sec or more.

Raising the gas flow rate at the time of residual exhaust gas dispersal is preferable in that it prevents flashbacks, however, if raised too high, sometimes the flame blows out, so a rate of 12 m/sec or less is preferable.

### EMBODIMENT

Next, an embodiment of the present invention will be explained, however, the conditions of the embodiment are examples of conditions used to confirm the workability and advantageous effects of the present invention. The present invention is not limited to these examples of conditions. The present invention can use various conditions so long as it does not stray from the gist of the present invention and achieves the object of the present invention.

### (Embodiment 1)

In the exhaust gas path shown in FIG. 2, at the time of idling of operation of the shaft furnace, the cutoff valve was actuated and nitrogen fed into the exhaust gas pipe at 1,300 Nm³/hr and the furnace top pressure regulators of the mist separator were closed and the opening degree of the in-path pressure regulator appropriately adjusted to hold the gas pressure in the mist separator at 48 hPa.

In the cooler, 5 hPa could be secured and entry of air into the gas path containing the exhaust gas treatment device could be prevented. The residual exhaust gas was dispersed through the bypass pipeline at a flow rate of 8 m/sec from the outlet of the combustion dispersion stack into the atmosphere.

During residual exhaust gas treatment, this was continued, whereby the gas pressure of the gas path could be maintained at a positive pressure and the gas could be dispersed from the combustion dispersion stack at a flow rate exceeding the flashback rates of the combustible ingredients, so no flashbacks occurred.

### INDUSTRIAL APPLICABILITY

As explained above, according to the present invention, when the operation of a shaft furnace is idled or stopped, the exhaust gas containing combustible ingredients remaining in the exhaust gas path containing an exhaust gas treatment device can be safely burned and dispersed into the atmosphere without fear of flashbacks. Therefore, the present invention has great applicability in secondary industries operating furnaces that release exhaust gas containing combustible ingredients.

## Claims

1. A residual exhaust gas treatment method treating exhaust gas containing combustible ingredients remaining in an exhaust gas path containing an exhaust gas treatment device when operation of a shaft furnace is idled or stopped, comprising
(a) closing the exhaust gas path between the shaft furnace and exhaust gas treatment device,
(b) feeding nitrogen into the exhaust gas path at the exhaust gas treatment device side,
(c) holding the gas pressure in the exhaust gas path at a positive pressure, and
(d) burning and dispersing the gas at a flow rate exceeding flashback rates of CO and H₂.

2. A residual exhaust gas treatment method as set forth in claim 1, wherein the exhaust gas includes CO: 25 to 30% and H₂: 2 to 3%.

3. A residual exhaust gas treatment method as set forth in claim 1 or 2, wherein the exhaust gas treatment device includes a gas cooler and a dust eliminator.

4. A residual exhaust gas treatment method as set forth in any one of claims 1 to 3, wherein the gas in the exhaust gas path is cooled and cleared of dust before combustion and dispersal.

5. A residual exhaust gas treatment method as set forth in any one of claims 1 to 4, wherein the flow rate exceeding the flashback rates is 5 m/sec or more.

6. A residual exhaust gas treatment method as set forth in any one of claims 1 to 5, wherein the flow rate exceeding the flashback rates is 12 m/sec or less.

7. A residual exhaust gas treatment system treating exhaust gas containing combustible ingredients remaining in an exhaust gas path containing an exhaust gas treatment device when operation of a shaft furnace is idled or stopped, the system provided with
(a) a cutoff valve closing the exhaust gas path between the shaft furnace and exhaust gas treatment device,
(b) a nitrogen feeding means for feeding nitrogen from near the cutoff valve to the inside of exhaust gas path at the exhaust gas treatment device side,
(c) a gas pressure regulator maintaining a gas pressure in the exhaust gas path between the exhaust gas treatment device and a combustion dispersion stack at a positive pressure, and
(d) a cutoff valve closing the gas passage of the combustion dispersion stack and a bypass pipeline branching from the combustion dispersion stack and burning and dispersing the gas in the exhaust gas path.

8. A residual exhaust gas treatment system as set forth in claim 7, wherein the exhaust gas includes CO: 25 to 30% and H₂: 2 to 3%.

9. A residual exhaust gas treatment system as set forth in claim 7 or 8, wherein the exhaust gas treatment device includes a gas cooler and dust eliminator.

10. A residual exhaust gas treatment system as set forth in any one of claims 7 to 9, wherein the gas in the exhaust gas path is cooled and cleared of dust before combustion and dispersal.

11. A residual exhaust gas treatment system as set forth in any one of claims 7 to 11, which burns and disperses the gas in the exhaust gas path from an outlet of the bypass pipeline at a flow rate exceeding the flashback rates of CO and H₂.

12. A residual exhaust gas treatment system as set forth in claim 11, wherein the flow rate exceeding the flashback rates is 5 m/sec or more.

13. A residual exhaust gas treatment system as set forth in any one of claims 7 to 12, wherein the flow rate exceeding the flashback rates is 12 m/sec or less.
